# EUROPEAN PATENT APPLICATION

(11) **EP 3 386 205 A1**
(43) Date of publication of application: **10.10.2018**
(21) Application number: 18172680.3
(22) Date of filing: 02.01.2014
(51) Int. Cl.: H04N 21/422, H04N 21/472, G10L 15/00

(54) **INTERACTIVE SERVER, DISPLAY APPARATUS, AND CONTROL METHOD THEREOF**

(30) Priority: 07.01.2013 KR 20130001755
(62) Divisional of application: 14150053.8
(71) Applicant: Samsung Electronics Co., Ltd., Gyeonggi-do 16677 (KR)
(72) Inventor: Chung, Ji-hye, Seoul (KR); Kim, Myung-jae, Suwon-si (KR); Shin, Yong-wook, Osan-si (KR); Lee, Bo-ra, Seoul (KR); Lee, Jin-sik, Suwon-si (KR); Lee, Cheong-jae, Suwon-si (KR)
(74) Representative: Appleyard Lees IP LLP

(57) **Abstract**

A display apparatus (100) comprises an input unit (110) configured to receive a user voice command and convert the voice command into a digital signal; a communication unit (120) configured to perform communication with at least one server (200, 10, 20); and a display unit (130) configured to display a content list including objects on a screen. A controller (140) is configured to send the digital signal to one of the at least one server, and to receive text information, and to receive response information to perform an operation corresponding to the voice command, and select a target object based on the response information, and further select the target object referred to by the indicator based on a display status of the objects displayed on the screen of the display unit, and to perform the operation corresponding to the command word with respect to the selected target object.

## Description

### CROSS-REFERENCE TO RELATED APPLICATIONS

This application claims the benefit under 35 U.S.C. § 119(a) from Korean Patent Application No. 10-2013-0001755 filed on January 7, 2013, in the Korean Intellectual Property Office, the disclosure of which is incorporated herein by reference in its entirety.

### BACKGROUND

### 1. Field

The present disclosure relates to an interactive server, a display apparatus, and a control method thereof. More particularly, the present disclosure relates to an interactive server, a display apparatus, and a control method thereof for providing response information corresponding to a user's voice command.

### 2. Description of the Related Art

Generally, in an interactive system, a display apparatus capable of voice recognition collects a user's voice command, and sends the collected voice command to an external server connected through a network. The external server, which receives the voice command, analyzes the voice command so as to identify an intention of the user, generates response information corresponding to the user's intention, and sends the response information to the display apparatus. Accordingly, the display apparatus may perform a function or provide information corresponding to the user's voice command based on the response information received from the external server.

However, the conventional interactive system is limited to analyzing the user's voice command and identifying the user's intention based on an analyzing result thereof. For example, when a target referred to by the voice command is clear like "Show me a first content", the external server can correctly identify the user's intention by analyzing the voice command, generate response information according to the user's intention, and send the response information to the display apparatus. Accordingly, the display apparatus can display the first content requested by the user based on the response information.

However, when a target referred to by the voice command is unclear like "Show me this", the external server has a problem which is that it cannot clearly identify the user's intention from the voice command. In other words, since the conventional interactive system identifies the user's intention with respect to only predefined voice commands and performs an operation or provides information corresponding to the user's intention, there is a problem that the voice commands that are recognizable by the external server are limited.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

An aspect of the present disclosure relates to provide an interactive system which can perform operations corresponding to a variety of voice commands.

The above aspect and/or other feature of the present disclosure can substantially be achieved by providing an interactive server which may include a communication unit configured to perform communication with a display apparatus and receive a voice command signal including a first command element representing a target and a second command element representing an execution command; a storage unit configured to store a plurality of indicators and a plurality of command words; an extraction unit configured to extract an indicator corresponding to the first command element and a command word corresponding to the second command element from the storage unit; and a controller configured to generate response information corresponding to the voice command signal by combining the extracted indicator and command word, and send the response information to the display apparatus, wherein the first command element is an command element that is determined based on a displaying status of objects displayed on a screen of the display apparatus.

The first command element may include at least one of a pronoun, an ordinal number, and a direction. The extraction unit may be further configured to determine whether the first command element includes request information, and, if the first command element includes the request information, to extract a command word corresponding to the request information from the storage unit. The controller may be further configured to add content information corresponding to the request information to the response information based on the extracted command word corresponding to the request information.

The indicator may include an execution word that refers to the target among the objects displayed on the screen of the display apparatus.

The indicator may include unique identifying information of the objects displayed on the screen of the display apparatus; and the extraction unit may be further configured to determine the target referred to by the first command element based on a conversation history of the display apparatus, and may extract the unique identifying information corresponding to the determined target as the indicator.

The interactive server may further include a voice processing unit configured to convert the received voice command signal into text information.

According to another aspect of the present disclosure, a display apparatus may include an input unit configured to receive a voice command; a communication unit configured to send a voice command signal for the voice command to a server apparatus; a display unit configured to display a screen; and a controller configured to select a target referred to by an indicator based on a display status of objects displayed on the screen of the display unit when response information including the indicator and a command word is received from the server apparatus, and perform an operation corresponding to the command word with respect to the selected target.

The voice command signal may include a first command element representing the target and a second command element representing an execution command, and the first command element may be an command element that is determined based on a screen displaying status of the display apparatus, and may include at least one of a pronoun, an ordinal number, and a direction.

According to another aspect of the present disclosure, a control method of an interactive server may include receiving a voice command signal including a first command element representing a target and a second command element representing an execution command from a display apparatus; extracting, using a processor, an indicator corresponding to the first command element and a command word corresponding to the second command element; and generating response information corresponding to the voice command signal by combining the extracted indicator and command word, and sending the response information to the display apparatus, wherein the first command element may be an command element determined based on a displaying status of objects displayed on a screen of the display apparatus.

The first command element may include at least one of a pronoun, an ordinal number, and a direction.

The extracting an indicator corresponding to the first command element and a command word corresponding to the second command element may include determining whether the first command element includes request information, and extracting the command word corresponding to the request information from a storage unit if the first command element includes the request information, and the sending the response information to the display apparatus may include adding content information corresponding to the request information to the response information based on the extracted command word.

The indicator may include an execution word that refers to the target among the objects displayed on the screen of the display apparatus.

The indicator may include unique identifying information of the objects displayed on the screen of the display apparatus; and the extracting an indicator corresponding to the first command element and a command word corresponding to the second command element may include determining the target referred to by the first command element based on a conversation history of the display apparatus, and extracting the unique identifying information corresponding to the determined target as the indicator.

The control method may include converting the received voice command signal into text information.

According to another aspect of the present disclosure, a control method of a display apparatus may include receiving a voice command; sending a voice command signal corresponding to the voice command to a server apparatus; receiving response information including an indicator and a command word from the server apparatus; and selecting a target referred to by the indicator based on a displaying status of objects displayed on a screen, and performing, using a processor, an operation corresponding to the command word with respect to the selected target.

The voice command signal may include a first command element representing the target and a second command element representing an execution command, and the first command element may be an command element determined based on a screen displaying status of the display apparatus, and may include at least one of a pronoun, an ordinal number, and a direction.

According to another aspect of the present disclosure, a display apparatus may include a display unit configured to display a screen including a plurality of selectable objects; an input unit configured to receive a voice command; a communication unit configured to receive response information from an external device in response to receiving the voice command, the response information including a command word that is selected according to the voice command; and a controller configured to select a target object from among the plurality of selectable objects using the response information received from the external device, and to perform an operation corresponding to the command word with respect to the selected target object.

With an interactive server according to various embodiments of the present disclosure, an interactive server may identify a user's intention with respect to a variety of voice commands, may generate response information corresponding to the user's intention, and may provide the response information to a display apparatus.

Other objects, advantages and salient features of the present disclosure will become apparent from the following detailed description, which, taken in conjunction with the annexed drawings, discloses preferred embodiments.

### BRIEF DESCRIPTION OF THE DRAWINGS

These and/or other aspects and advantages of the present disclosure will become apparent and more readily appreciated from the following description of the embodiments, taken in conjunction with the accompanying drawings of which:
FIG. 1 is a first view illustrating an interactive system to provide response information appropriate to a user's voice command according to an embodiment of the present disclosure;
FIG. 2 is a second view illustrating an interactive system to provide response information appropriate to a user's voice command according to another embodiment of the present disclosure;
FIG. 3 is a block diagram illustrating an interactive server according to an embodiment of the present disclosure;
FIG. 4 is a view illustrating a displaying status of objects displayed on a screen of a display apparatus according to an embodiment of the present disclosure;
FIG. 5 is a block diagram illustrating a display apparatus according to an embodiment of the present disclosure;
FIG. 6 is a flowchart for explaining a control method of an interactive server according to an embodiment of the present disclosure; and
FIG. 7 is a flowchart for explaining a control method of a display apparatus according to an embodiment of the present disclosure.
Throughout the drawings, like reference numerals will be understood to refer to like parts, components and structures.

### DETAILED DESCRIPTION OF THE EXEMPLARY EMBODIMENTS

Hereinafter, certain exemplary embodiments of the present disclosure will be described in detail with reference to the accompanying drawings.

The matters defined herein, such as a detailed construction and elements thereof, are provided to assist in a comprehensive understanding of this description. Thus, it is apparent that exemplary embodiments may be carried out without those defined matters. Also, well-known functions or constructions are omitted to provide a clear and concise description of exemplary embodiments. Further, dimensions of various elements in the accompanying drawings may be arbitrarily increased or decreased for assisting in a comprehensive understanding.

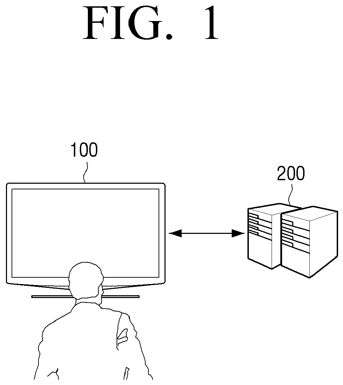

FIG. 1 is a view illustrating an interactive system to provide response information appropriate to a user's voice command according to an embodiment of the present disclosure.

As illustrated in FIG. 1, an interactive system according to an embodiment of the present disclosure includes a display apparatus 100 and an interactive server 200.

The display apparatus 100 is an apparatus capable of accessing the internet, and may be implemented as various electronic apparatuses such as smart TVs, cell phones, e.g., smart phones, desktop PCs, notebook computers, navigation devices, etc. When a user's voice command is input, the display apparatus 100 performs an operation corresponding to the input voice command. In detail, the display apparatus 100 may output a response message corresponding to the user's voice command or may perform a function corresponding to the user's voice command. In other words, the display apparatus 100 determines an action to perform by analyzing the input voice command. Then, depending on the determined result, the display apparatus 100 may perform a function corresponding to the input voice command or may perform an operation based on the response information received from the interactive server 200.

For example, if an voice command of "Volume up" is input, the display apparatus 100 may adjust a volume based on control information corresponding to the input voice command among pre-stored control information.

For another example, if a voice command of "How's the weather today?" is input, the display apparatus 100 sends a voice command signal (hereinafter, referred to as a voice command) with respect to the input voice command to the interactive server 200. Here, the voice command may be an analog signal. Accordingly, the display apparatus 100 converts the voice command of the analog signal into a digital signal, and then sends the digital signal to the interactive server 200. Then, the display apparatus 100 may output a result about today's weather in the form of a voice or a text image based on the response information received from the interactive server 200.

The interactive server 200 provides response information appropriate to a user's intention based on the user's voice command received from the display apparatus 100. In detail, if the user's voice command is received from the display apparatus 100, the interactive server 200 may extract command elements from the received voice command, may generate response information related to the user's voice command based on the extracted command elements, and may send the response information. As described above, the voice command received from the display apparatus 100 may be a digital signal. Accordingly, after the voice command, which is converted into the digital signal, is received, the interactive server 200 may convert the voice command into text information, and then extract command elements by analyzing the generated text information. Then, the interactive server 200 may generate response information corresponding to the user's voice command based on the extracted command elements. To generate the text information from the voice command converted into the digital signal is a known technology; therefore, a detailed description thereof will be omitted in the present description.

On the other hand, there may be command elements within the user's voice command, that include core keywords for performing the operation requested by the user. The extracted command elements may be classified by a purpose area (domain), a purpose function (user action), and a main feature (feature). As described above, if the text information with respect to the user's voice command of "How's the weather today?" is generated, the interactive server 200 may extract the command elements of "today", "weather", and "How's?". After that, the interactive server 200 may classify "today" and "weather" as command elements for the main feature (hereinafter, referred to as a first command element), and may classify "How's?" as command elements for the purpose function (hereinafter, referred to as a second command element). Also, the interactive server 200 may classify the command elements for the purpose area (hereinafter, referred to as a third command element) to be belonged to a domain of a web search based on the extracted command elements. After the first to third command elements are classified from the text information with respect to the user's voice command, the interactive server 200 is provided with weather information from an external server (not illustrated) which provides a variety of contents, generates response information including the weather information, and sends the response information to the display apparatus 100. Accordingly, the display apparatus 100 may display today's weather information through at least one of voice and text based on the response information received from the interactive server 200.

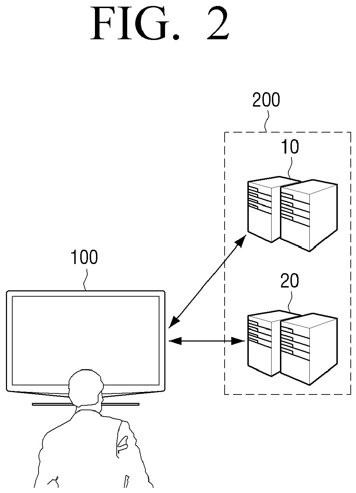

On the other hand, as illustrated in FIG. 2, the above-described interactive server 200 may include a first server 10 which converts the user's voice command having been converted into the digital signal into the text information, and a second server 20 which generates response information corresponding to the voice command having been converted into the text information. Hereinafter, an interactive system which provides response information appropriate to the user's voice command through the display apparatus 100 and the first and second servers 10 and 20 will be described in detail.

FIG. 2 is a second view illustrating an interactive system to provide response information appropriate to a user's voice command according to another embodiment of the present disclosure.

As illustrated in FIG. 2, if the user's voice command is input, the display apparatus 100 converts the input voice command into a digital signal, and then sends the digital signal to the first server 10. After the voice command converted into the digital signal is received, the first server 10 generates text information with respect to the voice command according to pre-stored specific patterns for various voice commands, and then sends the text information to the display apparatus 100.

The display apparatus 100, which receives the text information about the user's voice command from the first server 10, sends the text information about the user's voice command to the second server 20.

In some example embodiments, the first server 10 sends the text information directly to the second server 20.

The second server 20, which receives the text information about the voice command, may extract command elements by analyzing the received text information, may generate response information for performing an operation corresponding to the user's voice command based on the extracted command elements, and then may send the response information to the display apparatus 100.

So far, operations for the interactive system consisting of the display apparatus 100 and the interactive server 200 according to an embodiment of the present disclosure to provide the response information corresponding to the user's voice command have been described. Hereinafter, a configuration of each of the above-described display apparatus 100 and interactive server 200 will be described in further detail.

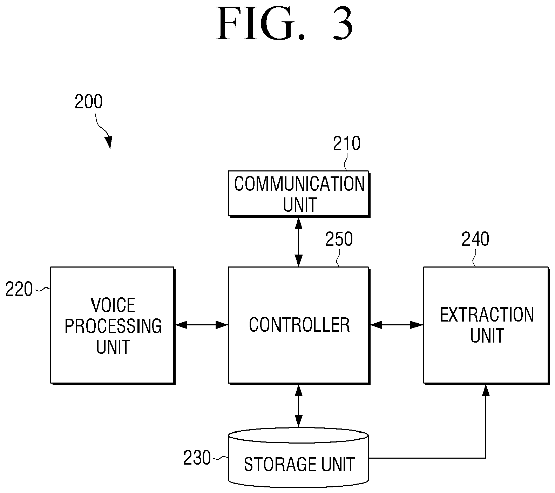

FIG. 3 is a block diagram illustrating an interactive server 200 according to an embodiment of the present disclosure.

As illustrated in FIG. 3, the interactive server 200 includes a communication unit 210, a voice processing unit 220, a storage unit 230, an extraction unit 240, and a controller 250.

The communication unit 210 communicates with the display apparatus 100 in order to receive the voice command. Particularly, the communication unit 210 may receive digital signals corresponding to the voice command including the first command element representing the target and the second command element representing an execution command. Here, the first command element is an command element which is classified as the main feature within the user's voice command. If the first command element is an command element which is determined based on a displaying status of objects displayed on a screen of the display apparatus 100, the first command element may be an command element representing the target. In other words, the first command element may be an command element representing the target through at least one of pronouns, ordinal numbers, and directions. Then, the second command element is an command element which is classified as an object function within the user's voice command. The object function is also referred to herein as the execution command.

For example, if the voice command is "Execute this", "this" may become the first command element presenting the pronoun, and "Execute" may become the second command element representing the execution command. After the digital signal corresponding to the voice command including the first and second command elements is received, the voice processing unit 220 converts the received voice command into text information. According to embodiments, the voice processing unit 220 may convert the received voice command into text by using a speech to text (STT) algorithm. However, the present disclosure is not limited by this. The communication unit 210 may receive the text information with respect to the user's voice command from the display apparatus 100. In this case, the display apparatus 100 receives the text information with respect to the input voice command from the above-described first server 10, and then sends the text information to the interactive server 200. Accordingly, the communication unit 210 can receive the text information with respect to the user's voice command from the display apparatus 100. In a case in which the text information corresponding to the user's voice command is received from the display apparatus 100, the voice processing unit 220 as described above may be omitted.

As described above, if the voice command is converted into the text information or if the text information correspond to the user's voice command is received from the display apparatus 100, the extraction unit 240 extracts an indicator corresponding to the first command element and a command word corresponding to the second command element from the storage unit 230. Here, the storage unit 230 is a storage-medium in which various types of programs required to operate the interactive server 200 are stored, and may be implemented as a memory, a hard disk drive (HDD), etc. For example, the storage unit 230 may include a ROM to store programs and to perform operations of the controller 250 as described later, a RAM to temporarily store data according as operations of the controller 250, etc. In addition, the storage unit 230 may further include an electrically erasable and programmable ROM (EEPROM) to store various reference data, etc. Particularly, the storage unit 230 may store a plurality of indicators and a plurality of command words. Here, the plurality of indicators and the plurality of command words are execution information in a form which can be interpreted by the display apparatus 100 and allows the display apparatus 100 to perform an operation based on the command elements extracted from the user's voice command. In detail, the indicator is an execution word to relatively refer to a target among objects displayed on the screen of the display apparatus 100. In other words, the indicator is the execution word in a form capable of being interpreted by the display apparatus 100 and allows the display apparatus 100 to perform an operation based on the first command element representing the target, such as the pronoun, the ordinal number, and the direction, among the command elements extracted from the user's voice command.

Accordingly, the storage unit 230 may store a table in which each of the first command elements representing the target is matched with an indicator as illustrated in Table 1.

**<Table 1>**

| first command element | Indicator |
|---|---|
| this | $this$ |
| next | $this$+1 |
| third | $3rd$ |

As illustrated in Table 1, the indicator corresponding to the first command element of "this" may be $this$, the indicator corresponding to the first command element of "next" may be $this$+1, and the indicator corresponding to the first command element of "third" may be "$3rd$".

Then, the plurality of command words stored in the storage unit 230 is execution information that in a form which can be interpreted by the display apparatus 100 and allows the display apparatus 100 to perform an operation based on the second command element representing the execution command among the command elements extracted from the user's voice command.

Accordingly, the storage unit 230 may store a table in which each of the second command elements representing the execution commands is matched with a command word as illustrated in Table 2.

**<Table 2>**

| second command element | Command word |
|---|---|
| Execute (execution) | execute |
| Show, What (information output) | show |

As illustrated in Table 2, the command word corresponding to the second command element of "Execute" may be "execute", and the command word corresponding to the second command element of "Show" and "What" may be "show".

As illustrated in Tables 1 and 2, the storage unit 230 may store the indicator for each of the first command elements representing the target and the command word for each of the second command elements representing the execution command. Accordingly, the extraction unit 240 may extract the first and second command elements from the user's voice command which is converted into the text information through the voice processing unit 220, and then may extract the indicator and the command word corresponding to the first and second extracted command elements from the storage unit 230.

The controller 250 generates response information corresponding to the user's voice command by combining the indicator and command word corresponding to the first and second command elements extracted from the extraction unit 240, and then sends the response information to the display apparatus 100 through the communication unit 210. For example, if the user's voice command is "Execute this", the extraction unit 240 may extract the first command element representing the target of "this" and the second command element representing the execution command of "Execute". After the first and second command elements are extracted, the extraction unit 240 extracts the indicator and command word corresponding to the first and second extracted command elements from the storage unit 230. In other words, the extraction unit 240 may extract the indicator, "$this$ corresponding to the first command element representing the target of "this" and the command word, "execute" corresponding to the second command element representing the execution command of "Execute" based on Table 1 and Table 2.

As described above, after the indicator and command word corresponding to the first and second command elements are extracted, the controller 250 generates an execution command script by combining the extracted indicator and command word. In other words, the controller 250 may generate the execution command script of "execute($this$)" by combining the indicator, "$this$" corresponding to the first command element and the command word, "execute" corresponding to the second command element representing the execution command of "Execute".

For another example, if the user's voice command is "Execute the third", the extraction unit 240 may extract the first command element representing the target of "the third" and the second command element representing the execution command of "Execute". After the first and second command elements are extracted, the extraction unit 240 extracts the indicator and the command word corresponding to the first and second command elements from the storage unit 230. In other words, the extraction unit 240 may extract the indicator, "$3rd$" corresponding to the first command element representing the target of "the third", and the command word, "execute" corresponding to the second command element representing the execution command of "Execute" based on Table 1 and Table 2.

After the indicator and command word corresponding to the first and second command elements are extracted, the controller 250 generates an execution command script by combining the extracted indicator and command word. In other words, the controller 250 may generate the execution command script of "execute($3rd$)" by combining the indicator, "$3rd$" corresponding to the first command element and the command word, "execute" corresponding to the second command element representing the execution command of "Execute".

For another example, if the user's voice command is "Execute next", the extraction unit 240 may extract the first command element representing the target of "next" and the second command element representing the execution command of "Execute". After the first and second command elements are extracted, the extraction unit 240 extracts the indicator and the command word corresponding to the first and second extracted command elements from the storage unit 230. In other words, the extraction unit 240 may extract the indicator, "$this$+1" corresponding to the first command element representing the target of "next", and the command word, "execute" corresponding to the second command element representing the execution command of "Execute" based on Table 1 and Table 2.

After the indicator and command word corresponding to the first and second command elements are extracted, the controller 250 generates the execution command script by combining the extracted indicator and command word. In other words, the controller 250 may generate the execution command script of "execute($this$+1)" by combining the indicator, "$this$+1" corresponding to the first command element representing the target of "next" and the command word, "execute" corresponding to the second command element representing the execution command of "Execute".

After the execution command script is generated, the controller 250 sends response information including the generated execution command script to the display apparatus 100. Accordingly, the display apparatus 100 may select an object corresponding to the target, to which the user refers, among the objects displayed on the screen based on the execution command script included in the response information received from the interactive server 200, and then may display the selected object.

Hereinafter, the voice command including the first and second command elements, which is uttered by the user based on the displaying status of the objects displayed on the screen of the display apparatus 100, will be described in detail.

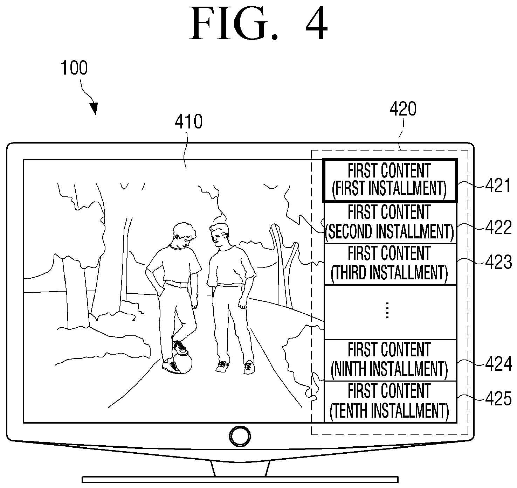

FIG. 4 is a view illustrating an voice command which is uttered based on a display status of objects displayed on a screen of a display apparatus according to an embodiment of the present disclosure.

As illustrated in FIG. 4, the display apparatus 100 may receive content 410 through a channel requested by the user, and then may display the content 410. Also, the display apparatus 100 may display a content list 420 for the content requested by the user on the screen based on the user command inputted through a remote controller or the user's voice command. As illustrated in FIG. 4, content information 421 to 425 about the first content which has been previously broadcasted may be displayed in the content list 420. The user may issue a command to the display apparatus 100 in order to watch the first content corresponding to a specific installment or episode by referring to series content information 421 to 425 indicated in the content list 420. For example, the user may say "Execute this" in order to watch the first content corresponding to first installment content information 421 or may say "Execute the third" in order to watch the first content corresponding to third installment content information 423.

As described above, the user may issue a voice command including the first command element representing the first content (target) of which installment the user wants to watch from the content list 420 displayed on the screen of the display apparatus 100 and the second command element representing the execution command for watching the corresponding installment of the first content. Accordingly, after the indicator and command word corresponding to the first and second command elements included in the voice command are extracted from the storage unit 230, the controller 250 may generate an execution command script by combining the extracted indicator and command word.

According to an additional aspect of the present disclosure, the extraction unit 240 determines whether there is request information in the first command element. If there is the request information, the extraction unit 240 extracts a command word corresponding to the request information. After that, the controller 250 may add content information corresponding to the request information to the response information based on the extracted command word, and then may send the response information to the display apparatus 100. For this, the storage unit 230 may additionally store command words for the request information. For example, the request information of "detail information" may be stored to correspond with the command word of "detail information". The request information of "title" may be stored to correspond with the command word of "title".

For example, if the user's voice command is "What is a title of this?", the extraction unit 240 may extract the first command element of "this" and "title", and the second command element representing the execution command of "What". Here, the first extracted command element of "this" is an command element representing the target, and the first command element of "title" may be an command element representing the request information. After the first and second command elements are extracted, the extraction unit 240 may extract the indicator, "$this$" corresponding to the first command element of "this", the command word, "title" corresponding to the first command element of "title", and the command word, "show" corresponding to the second command element of "What" from the storage unit 230. After the indicator and the command word corresponding to the first and second command elements are extracted, the controller 250 generates an execution command script by combining the extracted indicator and command word. In other words, the controller 250 may generate the execution command script of show (title) at ($this$) by combining the indicator, "$this$" corresponding to the first command element representing the target of "this", the command word, "title" corresponding to the first command element representing the request information of "title", and the command word, "show" corresponding to the second command element representing the execution command of "What".

After the execution command script is generated, the controller 250 determines whether the generated execution command script includes a command word representing the request information. If the execution command script includes the command word representing the request information, the controller 250 determines whether the content information corresponding to the request information is obtained based on conversation history information with the display apparatus 100 stored in the storage unit 230. For example, the controller 250 may send the response information including the content information about an action movie to the display apparatus 100 based on the voice command of "Show me an action movie" which was received before the user's voice command of "What is a title of this?" After that, as described previously, if the execution command script including the command word representing the request information is generated, the controller 250 may obtain title information about the corresponding content from electronic program guide (EPG) information stored in the storage unit 230 or may receive the title information through an external server (not illustrated) based on previous conversation history information. After that, the controller 250 may generate response information including the pre-generated execution command script and the title information, and then may send the response information to the display apparatus 100.

However, the present disclosure is not limited by this. The controller 250 may send the response information about the execution command script including the command word representing the request information to the display apparatus 100. In this case, the display apparatus 100 may select an object corresponding to the target referred to by the indicator among the objects displayed on the screen by interpreting the execution command script included in the response information received from the interactive server 200, and then may perform an operation corresponding to the command word with respect to the selected object. Accordingly, the display apparatus 100 may obtain the title information of the content corresponding to the selected object from the pre-stored EPG information or receive the title information through the external server (not illustrated), and then may output the title information.

According to an additional aspect of the present disclosure, the indicator stored in the storage unit 230 may be unique identifying information of the objects displayed on the screen of the display apparatus 100. In this case, the extraction unit 240 determines the target to which the first command element extracted from the user's voice command refers based on the conversation history of the display apparatus 100, and then may extract the unique identifying information corresponding to the determined target as the indicator.

In detail, the display apparatus 100 and the interactive server 200 may share the unique identifying information about the content displayed on the screen of the display apparatus 100. Here, the unique identifying information is information to identify content which is currently being displayed in the display apparatus 100 and content which will be provided depending on the user's request. For example, as illustrated in FIG. 4, the display apparatus 100 may display the content 410 and the content list 420 including the series content information 421 to 425 on the screen thereof. In this case, the content 410 may be granted unique identifying information (#1234) representing the content is currently being displayed, and the content list 420 may be granted unique identifying information (#5678) different from the content 410 currently being displayed.

Accordingly, if the first and second command elements are extracted from the user's voice command, the extraction unit 240 may determine the target referred to from the first command element among the extracted command elements, may obtain the unique identifying information corresponding to the determined target from the storage unit 230, and may determine the unique identifying information as the indicator. For example, if the voice command is "Execute this", the extraction unit 240 may extract the first command element of "this". After the first command element is extracted, the extraction unit 240 may extract the indicator, $this$ corresponding to the first command element of "this" from the storage unit 230. After the indicator is extracted, the extraction unit 240 may understand that the target referred to by the first command element is different from the content 210 currently being displayed on the screen of the display apparatus 100 through the extracted indicator. Accordingly, the extraction unit 240 may convert the indicator, $this$ corresponding to the first command element of "this" into the unique identifying information (#5678).

If the voice command is "What is a title of the thing which I am watching?", the extraction unit 240 may extract the first command element of "the thing which I am watching". As described above, after the first command element is extracted, the extraction unit 240 may extract the indicator, $showing_content$ corresponding to the first command element of "the thing which I am watching" from the storage unit 230. After the indicator is extracted, the extraction unit 240 may understand that the target referred to by the first command element is the content currently being displayed on the screen of the display apparatus 100 through the extracted indicator. Accordingly, the extraction unit 240 may convert the indicator, $showing_content$ corresponding to the first command element of "the thing which I am watching" into the unique identifying information (#1234).

The configuration of the interactive server 200 according to an embodiment of the present disclosure has been described in detail. Hereinafter, the configuration of the display apparatus 100 which receives the user's voice command will be described in detail.

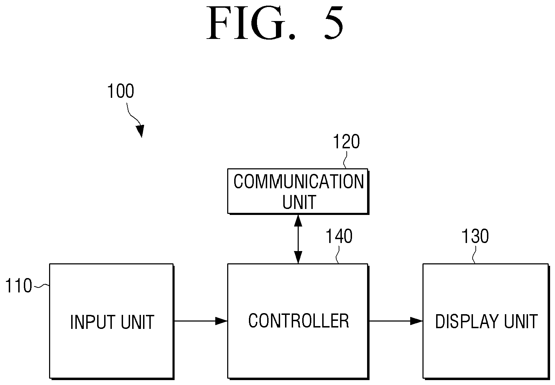

FIG. 5 is a block diagram illustrating a display apparatus according to an embodiment of the present disclosure.

As illustrated in FIG. 5, the display apparatus 100 includes an input unit 110, a communication unit 120, a display unit 130, and a controller 140.

The input unit 110 receives the voice command that is uttered by the user. In detail, if the voice command is input in the form of an analog signal, the input unit 110 converts the voice command into a digital signal by sampling the input voice command. At this time, if the input voice command includes noise (for example, an air conditioning sound, a vacuum cleaner sound, etc.), the input unit 110 may remove the noise, and then may convert the voice command having the noise removed therefrom into the digital signal. In addition, the input unit 110 may perform a function to receive and deliver various operations of the user to the controller 140. In this case, the input unit 110 may receive operation commands of the user through a touch pad, a key pad provided with various function keys, number keys, special keys, and character keys, etc., or a touch screen.

The communication unit 120 sends the voice command inputted through the input unit 110 to a server apparatus (hereinafter, referred to as an interactive server 200), and receives response information corresponding to the sent voice command. Here, the communication unit 120 may include various communication modules such as a local area wireless communication module (not illustrated), a wireless communication module (not illustrated), etc. Here, the local area wireless communication module (not illustrated) is a communication module to perform wireless communication with the interactive server 200 located at close range and an external server (not illustrated) to provide content, and may be, for example, Bluetooth, Zigbee, etc. The wireless communication module is a module to perform communication by being connected to the external network according to a wireless communication protocol such as Wi-Fi, IEEE, etc. In addition, the wireless communication module may further include mobile communication modules to perform communication by being connected to the mobile communication network according to various mobile communication standards such as third generation (3G), third generation partnership project (3GPP), long term evolution (LTE), etc.

The display unit 130 may be implemented as a liquid crystal display (LCD), an organic light emitting display (OLED), an active-matrix organic light emitting diode (AMOLED), a plasma display panel (PDP), etc., and may display various screens which can be provided through the display apparatus 100. Particularly, the display unit 130 may display content or content information corresponding to the voice command based on the response information received from the interactive server 200.

The controller 140 controls an overall the configuration of the display apparatus 100. Particularly, if the response information including the execution command script generated by combination of the indicator and the command word is received from the interactive server 200, the controller 140 selects a target referred to by the indicator based on the displaying status of the objects displayed on the screen of the display unit 130. After that, the controller 140 performs an operation corresponding to the command word with respect to the selected target.

In detail, as illustrated in FIG. 4, the display apparatus 100 may receive and display the content 410 through a channel requested by the user depending on the control command of the controller 140. Also, the display apparatus 100 may display the content list 420 for the content requested by the user on the screen thereof based on the user command input through a remote controller or the voice command. Also, the display apparatus 100 may highlight the first installment content information 421 among the series content information 421 to 425 displayed in the content list 420 based on preset conditions. In other words, when the content list 420 including the series content information 421 to 425 is initially indicated on the screen thereof, the display apparatus 100 may highlight the first installment content information 421 placed at the topmost so that it may be preferentially selected based on the preset condition.

The user may issue a voice command for watching the first content corresponding to the specific installment by referring to the series content information 421 to 425 displayed in the content list 420. For example, the user may say "Execute this" in order to watch the first content corresponding to the first installment content information 421. Accordingly, the display apparatus 100 may receive the voice command of "Execute this". As described above, the display apparatus 100 according to an embodiment of the present disclosure may receive the voice command including the first command element representing the target which refers to one of the plurality of objects in a state in which the plurality of objects is displayed on the screen and the second command element representing the execution command for executing the corresponding target. Here, the first command element may represent the target through at least one of pronouns, ordinal numbers, and directions. For example, the voice command of "Execute this" may include the first command element representing the target by the pronoun, and the voice command of "Execute the third" may include the first command element representing the target by the ordinal number.

If the voice command including the first command element representing the target and the second command element representing the execution command for executing the corresponding target is input, the communication unit 120 sends the input voice command to the interactive server 200. The interactive server 200, which receives the voice command, extracts the indicator and command word corresponding to the first and second command elements included in the received voice command, and generates an execution command script by combining the extracted indicator and command word. As described in the aforementioned embodiment, if the voice command of "Execute this" is received, the interactive server 200 extracts the indicator, $this$ corresponding to the first command element representing the target of "this" and the command word, "execute" corresponding to the second command element representing the execution command of "Execute". After that, the interactive server 200 generates the execution command script by combining the indicator and command word extracted to correspond to the first and second command elements. In other words, the interactive server 200 combines the indicator, $this$ corresponding to the first command element and the command word, "execute" corresponding to the second command element representing the execution command of "Execute", thereby generating the execution command script of "execute ($this$)". The interactive server 200 generates the response information including the execution command script of "execute ($this$)", and then sends the response information to the display apparatus 100.

If the response information is received, the controller 140 may perform an operation corresponding to the voice command by interpreting the execution command script included in the received response information. As described in the aforementioned embodiment, if the response information including the execution command script of "execute ($this$)" is received, the controller 140 selects one of objects displayed on the screen and performs execution with respect to the selected object by interpreting the execution command script. In detail, the controller 140 separates the indicator and the command word by interpreting the execution command script. In other words, the controller 140 may separate "$this$" as the indicator and "execute" as the command word from the execution command script of "execute ($this$)".

As described above, if the indicator and the command word are separated from the execution command script, the controller 140 may select one of the pluralities of objects displayed on the screen based on the separated indicator. As illustrated in FIG. 4, the display unit 130 may display the content 410 received through a channel requested by the user and the content list 420 including the series content information 421 to 425 for the first content requested by the user. Also, the display unit 130 may highlight the first installment content information 421 among the series content information 421 to 425 included in the content list 420 based on a preset condition. In other words, when the display unit 130 initially displays the content list 420 including the series content information 421 to 425 on the screen, the display unit 130 may highlight the first installment content information 421 placed at the topmost thereof so that it can be preferentially selected based on the preset condition. In a state in which the first installment content information 421 is highlighted, if an operation command of the user is input through the input unit 110, the display unit 130 may highlight the content information (one of the rest of the series content information 422 to 425 except the first installment content information 421) corresponding to the inputted operation command of the user. In this case, it may be set so that the highlighted content information corresponding to the operation command of the user is preferentially selected.

Accordingly, if the indicator separated from the execution command script is "$this$", the controller 140 may determine that the currently highlighted content information is referred to. In other words, as illustrated in FIG. 4, when the first installment content information 421 is highlighted, the controller 140 may select the highlighted first installment content information 421 based on the indicator of "$this$". As described above, after the first installment content information 421 is selected, the controller 140 may receive and display the first content corresponding to the selected first installment content information 421 from the external server (not illustrated) based on the command word of "execute" separated from the execution command script.

As described in the aforementioned embodiment, the interactive server 200 may generate the response information including the execution command script of "execute ($3rd$)" from the voice command of "Execute the third", and then may send the response information to the display apparatus 100. After the response information is received, the controller 140 separates the indicator and the command word by interpreting the execution command script included in the response information received. In other words, the controller 140 may separate "$3rd$" as the indicator and "execute" as the command word from the execution command script of "execute ($3rd$)". On the other hand, as illustrated in FIG. 4, when the first installment content information 421 is highlighted, the controller 140 may select the third installment content information 423 placed third from the highlighted first installment content information 421 based on the indicator of "$3rd$". As described above, if the third installment content information 423 is selected, the controller 140 may receive and display the first content corresponding to the selected third installment content information 423 from the external server (not illustrated) based on the command word of "execute" separated from the execution command script.

The configuration of the display apparatus 100 according to the present disclosure that recognizes the voice command and performs an operation based on the response information corresponding to the recognized voice command has been described in detail. Hereinafter, a control method of the interactive server 200 to provide the response information corresponding to the user voice command and the display apparatus 100 to perform an operation based on the response information will be described in detail.

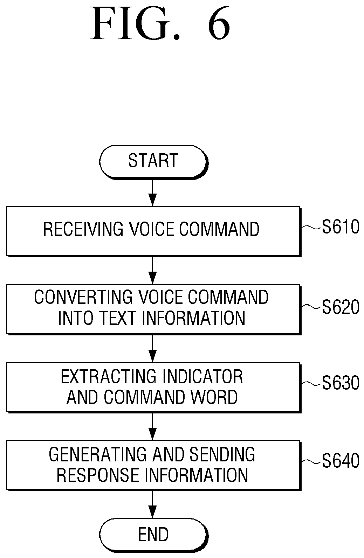

FIG. 6 is a flowchart for explaining a control method of an interactive server according to an embodiment of the present disclosure.

As illustrated in FIG. 6, the interactive server 200 receives a voice command including a first command element representing a target and a second command element representing an execution command (S610). Here, the voice command is a voice signal which is converted from an analog form of the voice signal into a digital signal. The first command element is an command element which is classified as the main features within the voice command. If the first command element is an command element determined based on a displaying status of objects displayed on the screen of the display apparatus 100, the first command element may be an command element representing the target. In other words, the first command element may be an command element representing the target through at least one of pronouns, ordinal numbers, and directions. Then, the second command element may be an command element which is classified as the execution command within the voice command.

For example, in a case of the voice command of "Execute this", "this" may be the first command element representing the pronoun, and "Execute" may be the second command element representing the execution command. If the digital signal about the voice command including the first and second command elements is received, the interactive server 200 converts the received voice command into text information (S620). According to an embodiment, the interactive server 200 may convert the received voice command into texts by using the speech to text (STT) algorithm. However, the present disclosure is not limited by this. The interactive server 200 may receive the text information about the voice command from the display apparatus 100. In this case, the display apparatus 100 receives the text information about the input voice command from an ASR server such as the above-described first server 10, and then sends the text information to the interactive server 200. Accordingly, the interactive server 200 may receive the text information about the voice command from the display apparatus 100.

As described above, if the voice command is converted into the text information or the text information about the voice command is received from the display apparatus 100, the interactive server 200 extracts the indicator corresponding to the first command element and the command word corresponding to the second command element from the voice command converted into the text information (S630). In detail, the interactive server 200 may store a plurality of indicators and a plurality of command words. Here, the plurality of indicators and command words are execution information which has a form capable of being interpreted by the display apparatus 100 and allows the display apparatus 100 to perform an operation. In more detail, the indicator may be an execution word to relatively refer to the target among the objects displayed on the screen of the display apparatus 100. In other words, the indicator is the execution word that is a form capable of being interpreted by the display apparatus 100 and allows the display apparatus 100 to perform an operation based on the first command element representing the target, such as pronouns, ordinal numbers, and directions, among the command elements extracted from the user's voice command. Then, the command word is execution information that is in a form capable of being interpreted by the display apparatus 100 and allows the display apparatus 100 to perform an operation based on the second command element representing the execution command among the command elements extracted from the user's voice command. Accordingly, the interactive server 200 may store tables in which the first command elements representing the target are matched with the indicators and the second command elements representing the execution command are matched with the command words as illustrated in Tables 1 and 2 above. Therefore, the interactive server 200 may extract the indicator and command word corresponding to the first and second command elements from the pre-stored tables.

After the indicator and command word corresponding to the first and second command elements are extracted, the interactive server 200 generates response information corresponding to the voice command by combining the extracted indicator and command word, and then sends the response information to the display apparatus 100 (S640).

For example, if the user's voice command is "Execute this", the interactive server 200 may extract the first command element representing the target of "this" and the second command element representing the execution command of "Execute". After the first and second command elements are extracted, the interactive server 200 extracts the indicator and command word corresponding to the first and second command elements from the pre-stored tables. In other words, the interactive server 200 may extract the indicator, "$this$ corresponding to the first command element representing the target of "this" and the command word, "execute" corresponding to the second command element representing the execution command of "Execute" as illustrated in Tables 1 and 2. After that, the interactive server 200 may generate the execution command script of "execute ($this$)" by combining the extracted indicator and command word.

For another example, if the user's voice command is "Execute the third", the interactive server 200 may extract the first command element representing the target of "the third" and the second command element representing the execution command of "Execute". After the first and second command elements are extracted, the interactive server 200 extracts the indicator and the command word corresponding to the first and second command elements from the pre-stored tables. In other words, the interactive server 200 may extract the indicator, "$3rd$" corresponding to the first command element representing the target of "the third", and the command word, "execute" corresponding to the second command element representing the execution command of "Execute" as illustrated in Tables 1 and 2. After that, the interactive server 200 may generate the execution command script of "execute ($3rd$)" by combining the extracted indicator and command word.

After the execution command script is generated, the interactive server 200 generates the response information including the generated execution command script, and then sends the response information to the display apparatus 100. Accordingly, the display apparatus 100 may select an object corresponding to the target referred to by the user among the objects displayed on the screen based on the execution command script included in the response information received from the interactive server 200, and may display the selected object.

The interactive server 200 determines whether there is request information in the first command element. If there is the request information, the interactive server 200 extracts a command word corresponding to the request information. After that, the interactive server 200 may add content information corresponding to the request information to the response information based on the extracted command word, and then may send the response information to the display apparatus 100. For this, the interactive server 200 may additionally store a table in which the request information is matched with each of the command words. For example, the interactive server 200 may store the request information of "detail information" matched with the command word of "detail information", and the request information of "title" matched with the command word of "title".

For example, if the user's voice command is "What is a title of this?", the interactive server 200 may extract the first command element of "this" and "title", and the second command element representing the execution command of "What". Here, the first extracted command element of "this" is an command element representing the target, and the first command element of "title" may be an command element representing the request information. After the first and second command elements are extracted, the interactive server 200 may extract the indicator, "$this$" corresponding to the first command element of "this", the command word, "title" corresponding to the first command element of "title", and the command word, "show" corresponding to the second command element of "What" by referring to the pre-stored tables. After the indicator and the command word corresponding to the first and second command elements are extracted, the interactive server 200 may generate an execution command script of show (title) at ($this$) by combining the extracted indicator and the command word.

After the execution command script is generated, the interactive server 200 determines whether the generated execution command script includes the command word representing the request information. According to the determination result, if there is the command word in the execution command script, the interactive server 200 determines whether the content information corresponding to the request information is obtained based on the pre-stored conversation history information with the display apparatus 100. For example, the interactive server 200 may generate the response information including content information about the action movie based on the user's voice command of "Show me an action movie" which was received before the user's voice command of "What is a title of this?" and may send the response information to the display apparatus 100. After that, if the user's voice command of "What is a title of this?" is received, the interactive server 200 generates the execution command script for the voice command through the previously described steps. After that, if the command word about the request information is included in the pre-generated execution command script, the interactive server 200 may obtain title information about the corresponding content from electronic program guide (EPG) information or may receive the title information from an external server (not illustrated) based on the pre-stored conversation history information with the display apparatus 100. After that, the interactive server 200 may generate response information including the pre-generated execution command script and the title information, and then may send the response information to the display apparatus 100.

However, the present disclosure is not limited by this. The interactive server 200 may send the response information about the execution command script including the command word representing the request information to the display apparatus 100. In this case, the display apparatus 100 may select an object corresponding to the target referred to by the indicator among the objects displayed on the screen, and may perform an operation corresponding to the command word with respect to the selected object by interpreting the execution command script included in the response information received from the interactive server 200. Accordingly, the display apparatus 100 may obtain the title information of the content corresponding to the selected object from the pre-stored EPG information or receive the title information through the external server (not illustrated), and then may output the title information.

On the other hand, according to additional aspect of the present disclosure, the indicator stored in the interactive server 200 may be unique identifying information of the objects displayed on the screen of the display apparatus 100. Here, the unique identifying information is information to identify content which is currently being displayed in the display apparatus 100 and content which will be provided depending on the user's request. For example, as illustrated in FIG. 4, the display apparatus 100 may display the content 410 and the content list 420 including the series content information 421 to 425 on the screen thereof. In this case, the content 410 may be granted unique identifying information (#1234) representing the content currently being displayed, and the content list 420 may be granted unique identifying information (#5678) different from the content 410 currently being displayed.

Accordingly, if the first and second command elements are extracted from the voice command, the interactive server 200 may determine the target referred to from the first command element among the extracted command elements, may obtain the unique identifying information corresponding to the determined target from the pre-stored unique identifying information, and then may determine the unique identifying information as the indicator. For example, if the voice command is "Execute this", the interactive server 200 may extract the first command element of "this". After the first command element is extracted, the interactive server 200 may extract the indicator, $this$ corresponding to the first command element of "this" among the pre-stored indicators by first command elements. After the indicator is extracted, the interactive server 200 may understand that the target referred to by the first command element is different from the content 210 currently being displayed on the screen of the display apparatus 100 through the extracted indicator. Accordingly, the interactive server 200 may convert the indicator, $this$ corresponding to the first command element of "this" into the unique identifying information (#5678).

Hereinafter, a control method of the display apparatus 100 to perform an operation based on the response information corresponding to the user's voice command will be described in detail.

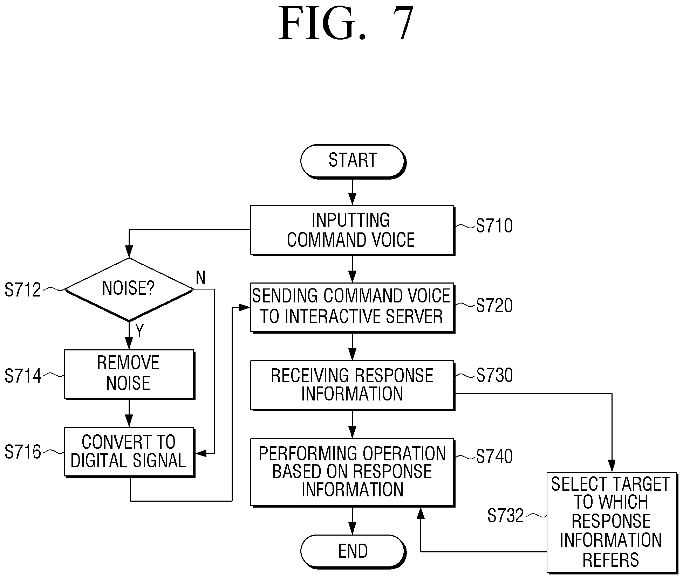

FIG. 7 is a flowchart for explaining a control method of a display apparatus according to an embodiment of the present disclosure.

As illustrated in FIG. 7, the display apparatus 100 receives the voice command (S710). If the voice command is input, the display apparatus 100 sends the input voice command to the interactive server 200 (S720).

In detail, the voice command is input in the form of an analog signal and the display apparatus 100 determines whether the input voice command includes noise (S712). If the voice command includes noise, then the display apparatus 100 may remove the noise from voice command (S714). When the voice command does not have noise, e.g., no at S712 or after noise is removed at S714, then the voice command is converted into a digital signal (S716).

After the voice command is converted into the digital signal, the display apparatus 100 sends the voice command converted into the digital signal to the interactive server 200 (S720), and then receives the response information corresponding to the voice command (S730) from the interactive server 200. If the response information is received, the display apparatus 100 selects a target to which the indicator contained in the response information refers based on the displaying status of the objects displayed on the screen (S732), and then performs an operation corresponding to the command word contained in the response information with respect to the selected target (S740).

In detail, as illustrated in FIG. 4, the display apparatus 100 may receive and display content through a channel requested by the user. Also, the display apparatus 100 may display a content list 420 for the content requested by the user on the screen thereof based on the user command inputted through a remote controller or the user's voice command. Also, the display apparatus 100 may highlight the first installment content information 421 among the series content information 421 to 425 displayed in the content list 420 based on a preset condition. In other words, when the content list 420 including the series content information 421 to 425 is initially indicated on the screen thereof, the display apparatus 100 may highlight the first installment content information 421 placed at the topmost thereof so that it can be preferentially selected based on the preset condition.

The user may say "Execute this" in order to watch the first content corresponding to the first installment content information 421 displayed in the content list 420. Accordingly, the display apparatus 100 may receive the user's voice command of "Execute this". As described above, the display apparatus 100 according to an embodiment of the present disclosure may receive the voice command including the first command element representing the target which refers to one of the plurality of objects in a state in which the plurality of objects is displayed on the screen and the second command element representing the execution command for executing the corresponding target. Here, the first command element may represent the target through at least one of pronouns, ordinal numbers, and directions. For example, the voice command of "Execute this" may include the first command element representing the target by the pronoun, and the voice command of "Execute the third" may include the first command element representing the target by the ordinal number.

If the voice command including the first command element representing the target and the second command element representing the execution command for executing the corresponding target is input, the display apparatus 100 converts the input voice command into a digital signal, and then sends the digital signal to the interactive server 200. Accordingly, the interactive server 200 extracts the indicator and command word corresponding to the first and second command elements included in the received voice command, and generates an execution command script by combining the extracted indicator and command word as described above. As described in the aforementioned embodiment, if the voice command of "Execute this" is received, the interactive server 200 extracts the indicator, $this$ corresponding to the first command element representing the target of "this" and the command word, "execute" corresponding to the second command element representing the execution command of "Execute". The interactive server 200 generates the execution command script of "execute ($this$)"by combining the indicator and command word extracted to correspond to the first and second command elements. Then, the interactive server 200 generates the response information including the execution command script of "execute ($this$)", and sends the response information to the display apparatus 100.

If the response information is received, the display apparatus 100 may perform an operation corresponding to the user's voice command by interpreting the execution command script included in the received response information. As described in the aforementioned embodiment, if the response information including the execution command script of "execute ($this$)"is received, the display apparatus 100 may separate "$this$" as the indicator and "execute" as the command word by interpreting the execution command script.

As described above, if the indicator and command word are separated from the execution command script, the display apparatus 100 may select one of the pluralities of objects displayed on the screen based on the separated indicator. As illustrated in FIG. 4, the display apparatus 100 may indicate highlight the first installment content information 421 among the series content information 421 to 425 included in the content list 420. Here, the highlighted first installment content information 421 may be a reference to select an object corresponding to the target to which the user refers. Accordingly, if the indicator separated from the execution command script is "$this$", the display apparatus 100 may determine that the highlighted first installment content information 421 is instructed, thereby selecting the first installment content information 421. If the first installment content information 421 is selected, the display apparatus 100 may receive and display the first content corresponding to the first installment content information 421 from the external server (not illustrated) based on the command word of "execute" separated from the execution command script.

For another example, the display apparatus 100 may receive the response information including the execution command script of "execute ($this$+1)" from the interactive server 200 with corresponding to the user's voice command of "Execute next". In this case, the display apparatus 100 may separate the indicator of "$this$+1" and the command word of "execute" by interpreting the execution command script contained in the received response information. On the other hand, as illustrated in FIG. 4, if the first installment content information 421 is highlighted, the display apparatus 100 may select second content information 422 placed next the highlighted first installment content information 421 based on the indicator of "$this$+1". As described above, if the second content information 422 is selected, the display apparatus 100 may receive and display the first content corresponding to the second installment content information 422 from the external server (not illustrated) based on the command word of "execute" separated from the execution command script.

While the embodiments of the present disclosure have been described, additional variations and modifications of the embodiments those skilled in the art once they learn of the basic concepts described herein. Therefore, it is intended that the appended claims shall be construed to include both the above embodiments and all such variations and modifications that fall within the spirit and scope of the concepts described herein.

Some aspects of the invention may be as follows:
Aspect 1. An interactive server comprising:
   a communication unit which performs communication with a display apparatus and receives an voice utterance signal including a first utterance element representing a target and a second utterance element representing an execution command;
   a storage unit which stores a plurality of indicators and a plurality of command words;
   an extraction unit which extracts an indicator corresponding to the first utterance element and a command word corresponding to the second utterance element from the storage unit; and
   a controller which generates response information corresponding to the voice utterance signal by combining the extracted indicator and command word, and sends the response information to the display apparatus,
   wherein the first utterance element is an utterance element that is determined based on a displaying status of objects displayed on a screen of the display apparatus.
2. The interactive server of Aspect 1, wherein
   the first utterance element comprises at least one of a pronoun, an ordinal number, and a direction.
3. The interactive server of Aspect 2, wherein
   the extraction unit determines whether the first utterance element includes request information, and, if the first utterance element includes the request information, the extraction unit extracts a command word corresponding to the request information from the storage unit, and
   wherein the controller adds content information corresponding to the request information to the response information based on the extracted command word corresponding to the request information.
4. The interactive server of Aspect 1, wherein
   the indicator comprises an execution word that refers to the target among the objects displayed on the screen of the display apparatus.
5. The interactive server of Aspect 1, wherein
   the indicator comprises unique identifying information of the objects displayed on the screen of the display apparatus; and
   the extraction unit determines the target referred to by the first utterance element based on a conversation history of the display apparatus, and extracts the unique identifying information corresponding to the determined target as the indicator.
6. The interactive server of Aspect 1, further comprising:
   a voice processing unit which converts the received voice utterance signal into text information.
Aspect 7. A control method of an interactive server, the control method comprising:
   receiving an voice utterance signal including a first utterance element representing a target and a second utterance element representing an execution command from a display apparatus;
   extracting, using a processor, an indicator corresponding to the first utterance element and a command word corresponding to the second utterance element; and
   generating response information corresponding to the voice utterance signal by combining the extracted indicator and command word, and sending the response information to the display apparatus,
   wherein the first utterance element is an utterance element determined based on a displaying status of objects displayed on a screen of the display apparatus.
8. The control method of Aspect 7, wherein
   the first utterance element comprises at least one of a pronoun, an ordinal number, and a direction.
9. The control method of Aspect 8, wherein
   the extracting an indicator corresponding to the first utterance element and a command word corresponding to the second utterance element comprises:
   determining whether the first utterance element includes request information; and
   extracting the command word corresponding to the request information from a storage unit if the first utterance element includes the request information, and
   the sending the response information to the display apparatus comprises adding content information corresponding to the request information to the response information based on the extracted command word.
10. The control method of Aspect 7, wherein
   the indicator comprises an execution word that refers to the target among the objects displayed on the screen of the display apparatus.
11. The control method of Aspect 7, wherein
   the indicator comprises unique identifying information of the objects displayed on the screen of the display apparatus; and
   the extracting an indicator corresponding to the first utterance element and a command word corresponding to the second utterance element comprises:
   determining the target referred to by the first utterance element based on a conversation history of the display apparatus; and
   extracting the unique identifying information corresponding to the determined target as the indicator.
12. The control method of Aspect 8, further comprising:
   converting the received voice utterance signal into text information.

## Claims

1. A display apparatus (100) comprising:
an input unit (110) configured to receive a user voice command and convert the voice command into a digital signal;
a communication unit (120) configured to perform communication with at least one server (200, 10, 20);
a display unit (130) configured to display a content list including objects on a screen and to display a content selected according to the voice command; and
a controller (140) configured to:
control the communication unit to send the digital signal of the voice command to one of the at least one server, and to receive text information corresponding to the voice command,
control the communication unit to send the text information to one of the at least one server, and to receive response information to perform an operation corresponding to the voice command, and
select a target object from among the objects in the content list based on the response information, and control the display to display the target object on the screen,
wherein the voice command includes a first command element representing the target object and a second command element representing an execution command, wherein the response information comprises an indicator corresponding to the first command element to relatively refer to the target object among the objects displayed on the screen of the display apparatus based on the first command element, and a command word which is an execution information to perform an operation based on the second command element, and
wherein the controller is further configured to select the target object referred to by the indicator based on a display status of the objects displayed on the screen of the display unit, and to perform the operation corresponding to the command word with respect to the selected target object.

2. The display apparatus (100) of claim 1, wherein the display unit (130) is configured to highlight the object corresponding to an inputted operation command a user.

3. The display apparatus (100) of claim 1, wherein the first command element comprises at least one of a pronoun, an ordinal number, and a direction.

4. The display apparatus (100) of claim 1, wherein the response information comprises an execution command script generated by combining the indicator and the command word.

5. A control method of a display apparatus, the control method comprising:
displaying a content list including objects on a screen;
receiving a user voice command;
converting the voice command into a digital signal;
sending the digital signal of the voice command to one of at least one server;
receiving text information corresponding to the voice command;
sending the text information to one of the at least one server;
receiving response information to perform an operation corresponding to the voice command;
selecting a target object from among the objects in the content list based on the response information; and
displaying the target object on the screen,
wherein the voice command includes a first command element representing the target object and a second command element representing an execution command, wherein the response information comprises an indicator corresponding to the first command element to relatively refer to the target object among the objects displayed on the screen of the display apparatus, and a command word which is an execution information to perform an operation based on the second command element, and
wherein the selecting comprises selecting the target object referred to by the indicator from among the objects based on a display status of the objects displayed on the screen, and
wherein the control method further comprises:
performing the operation with respect to the selected target object based on the command word.

6. The method of claim 5, comprising highlighting the object corresponding to an inputted operation command of a user.

7. The method of claim 5, wherein the first command element comprises at least one of a pronoun, an ordinal number, and a direction.

8. The method of claim 5, wherein the response information comprises an execution command script generated by combining the indicator and the command word.
